# EUROPÄISCHE PATENTSCHRIFT

(11) **EP 3 792 220 B1**
(45) Veröffentlichungstag und Bekanntmachung des Hinweises auf die Patenterteilung: **22.09.2021**
(21) Anmeldenummer: 19196933.6
(22) Anmeldetag: 12.09.2019
(51) Int. Cl.: C01B 17/765, C01B 17/775, C01B 17/80, C01B 17/90

(54) **VERFAHREN UND VORRICHTUNG ZUR GEWINNUNG VON SCHWEFELSÄURE AUS VERUNREINIGTEN SCHWEFELHALTIGEN MEDIEN**
METHOD AND DEVICE FOR OBTAINING SULPHURIC ACID FROM CONTAMINATED SULPHUR-CONTAINING MEDIA
PROCÉDÉ ET DISPOSITIF DE PRODUCTION D'ACIDE SULFURIQUE À PARTIR DE MILIEUX CONTENANT DU SULFURE CONTAMINÉS

(43) Veröffentlichungstag der Anmeldung: 17.03.2021
(73) Patentinhaber: P & P Industries AG, 8074 Raaba (AT)
(72) Erfinder: Goritschnig, Peter, 8301 Lassnitzhöhe (AT)
(74) Vertreter: Wirnsberger & Lerchbaum Patentanwälte OG

(56) Entgegenhaltungen:
- EP-A1- 0 345 632
- EP-A1- 0 421 629
- WO-A1-2014/075718
- US-A- 3 490 868
- H Müller: "Sulfuric Acid and Sulfur Trioxide", Ullmann's Encyclopedia of Industrial Chemistry, 1. Januar 2000 (2000-01-01), Seiten 1-71, XP055004903, DOI: 10.1002/14356007.a25 Gefunden im Internet: URL:http://onlinelibrary.wiley.com/store/1 0.1002/14356007.a25_635/asset/a25_635.pdf? v=1&t=grevldw3&s=7ec5ccd370065cfefbae3e81a 6107e9b9dc7ca90 [gefunden am 2011-08-16]

## Beschreibung

Die Erfindung betrifft ein Verfahren zur Gewinnung von Schwefelsäure, insbesondere aus verunreinigten schwefelhaltigen Medien wie einer Abfallschwefelsäure, wobei ein Prozessmedium, insbesondere ein Prozessgas, welches Prozessmedium Schwefelverbindungen, insbesondere Schwefeldioxid, umfasst, bereitgestellt wird, wobei die Schwefelverbindungen in einem Spaltofen gespalten und oxidiert und danach in einem ersten Konverter teilweise in Schwefelsäure umgesetzt werden, die Schwefelsäure in einem ersten Kondensor kondensiert und eine kondensierte Schwefelsäure als Säureprodukt abgeführt wird, wonach das Prozessmedium in einem zweiten Konverter teilweise in Schwefelsäure umgesetzt und die Schwefelsäure in einem zweiten Kondensor kondensiert und eine kondensierte Schwefelsäure als Produkt abgeführt wird.

Weiter betrifft die Erfindung eine Vorrichtung zur Gewinnung von Schwefelsäure, insbesondere aus verunreinigten schwefelhaltigen Medien wie einer Abfallschwefelsäure, umfassend zumindest einen Spaltofen und nachgeschaltet zwei Konverter und zumindest zwei Kondensoren, die den Konvertern jeweils nachgeschaltet sind, wobei ein Prozessmedium, insbesondere ein Prozessgas, welches Schwefelverbindungen, insbesondere Schwefeldioxid, umfasst, in einer Prozessrichtung durch die Vorrichtung führbar ist und die zumindest zwei Konverter zur Oxidation von Schwefeldioxid zu Schwefeltrioxid und die zumindest zwei Kondensoren zur Kondensation von Schwefelsäure ausgebildet sind.

Abfallschwefelsäuren enthalten einen großen Anteil an Metallsulfaten und müssen für eine Wiederverwertung wiederaufbereitet werden. Gegenwärtig schriftlich dokumentierter Stand der Technik ist es, Abfallschwefelsäuren in einem zweistufigen Verfahren zu regenerieren, wobei Schwefelverbindungen eines Prozessgases bzw. Prozessaerosols in einem ersten Verfahrensschritt oxidiert und in Schwefelsäure umgesetzt werden. In einem zweiten Verfahrensschritt werden im Prozessgas verbliebene Schwefelverbindungen erneut oxidiert und zu Schwefelsäure umgesetzt. Die Schwefelsäure wird hierbei sowohl im ersten als auch im zweiten Verfahrensschritt kondensiert und als Säureprodukt abgeführt.

In der Praxis umgesetzter Stand der Technik ist es, Abfallschwefelsäuren ebenfalls in einem zweistufigen Verfahren zu regenerieren. Hierzu offenbart das Dokument EP 0 421 629 A1 ein Verfahren zur Wiedergewinnung von Schwefelsäure aus Abfallschwefelsäure, mit welchem auch in der Abfallschwefelsäure enthaltene Metallsulfate und wiedergewonnen werden können. Dabei werden in der ersten Stufe in einem Spaltofen die Komponenten gespalten und das mit Staub und Metallsulfaten kontaminierte Prozessgas in einer Quenche und einem Wäscher gewaschen. Hierbei werden die Metallsulfate in eine oxidische Form überführt und vom Prozessgas abgetrennt, wodurch ein gereinigtes Prozessgas entsteht. Das gereinigte Prozessgas wird dann in einer zweiten Stufe mit einem trockenen katalytischen Verfahren in Schwefelsäure umgewandelt, allerdings mit Wirkungsgraden kleiner als 99,9 %.

Das Dokument WO 2014/075718 A1 offenbart ein Verfahren, mit welchem in einem Prozessgas enthaltenes Schwefeldioxid zu Schwefelsäure umgesetzt werden kann. Dabei wird Schwefeldioxid zunächst katalytisch zu Schwefeltrioxid oxidiert und anschließend in einem Kondensor verflüssigt. Nach Abführen der entstandenen konzentrierten Schwefelsäure durchläuft das Prozessgas eine Aerosolabscheidung, wonach ein Teil des im Prozessgas verbliebenen Schwefeldioxids an einem Aktivkohlekatalysator adsorbiert und oxidiert wird. Dieses wird zur Gewinnung einer Dünnsäure mit Wasser aus dem Aktivkohlekatalysator ausgewaschen und restliches noch im Prozessgas befindliches Schwefeldioxid wird schließlich als Abgas über einen Kamin abgeführt. Mit einem solchen Verfahren wird im Prozessgas befindliches Schwefeldioxid zu 99,8 % umgesetzt.

Das Dokument US 3,490,868 A offenbart ein Verfahren zur katalytischen Oxidation eines Schwefeldioxid enthaltenden Prozessgases. Dabei wird das bei der Oxidation erhaltene Schwefeltrioxid in einem zweistufigen Absorptionsprozess zu Schwefelsäure umgesetzt, wobei zur Aufkonzentrierung der Schwefelsäure ein erster Absorptionsprozess vor dem letzten Oxidationsschritt und ein zweiter Absorptionsprozess nach dem letzten Oxidationsschritt durchgeführt wird.

Nachteilig ist bei den bekannten Verfahren, dass Schwefeldioxid im Wäscher und/oder Abgas verbleibt, weshalb einerseits Schwefeldioxid verloren geht und es andererseits bei einer derartigen Wiederaufbereitung bzw. Regeneration ebenso wie bei einer Erzeugung von Schwefelsäure aus Rohgas, welches Schwefeldioxid umfasst, zu einer erheblichen Schwefeldioxidemission kommt und auch entstehendes Abwasser aufwendig gereinigt werden muss. Nachteilig ist des Weiteren die nicht 100%ige Umsetzung von SO₂ zu Schwefelsäure, was weltweit betrachtet zu einer erheblichen Schwefeldioxidemission führt, insbesondere wenn Schwefelsäure wiederaufbereitet werden soll.

Aufgabe der Erfindung ist es daher, ein Verfahren der eingangs genannten Art anzugeben, mit welchem eine Umweltbelastung bei der Gewinnung von Schwefelsäure reduziert wird.

Ferner ist es Aufgabe der Erfindung, eine Vorrichtung der eingangs genannten Art anzugeben, mit welcher eine Umweltbelastung bei der Gewinnung von Schwefelsäure reduziert wird.

Die erste Aufgabe wird erfindungsgemäß dadurch gelöst, dass bei einem Verfahren der eingangs genannten Art das Prozessmedium in einen dem zweiten Kondensor nachgeschalteten Aktivkohlereaktor geführt wird, wobei im Prozessmedium verbliebene Schwefelverbindungen zu Schwefeltrioxid oxidiert werden, welches an einer Aktivkohle adsorbiert, und die Aktivkohle regeneriert wird, wobei das Schwefeltrioxid mit einer Regenerationsflüssigkeit gelöst wird, wobei eine Dünnsäure gebildet wird, welche in einen Kondensor und/oder den Spaltofen geführt wird.

Ein mit der Erfindung erzielter Vorteil ist vor allem darin zu sehen, dass eine Effizienz des Verfahrens erhöht und somit ein hoher Wirkungsgrad erreicht wird, sodass im Prozessgas oder allgemein dem Prozessmedium enthaltene Schwefelverbindungen, insbesondere das darin enthaltene Schwefeldioxid, annähernd vollständig in Schwefelsäure umgesetzt werden. Somit ist eine Schwefeldioxidemission auf ein Minimum, insbesondere auf weniger als 10 ppm in einem Abgas, reduziert.

Im ersten Konverter werden etwa 95 %, im zweiten Konverter etwa 99 %, und im dritten Konverter bzw. dem Aktivkohlereaktor etwa ebenfalls 99 % von Schwefeldioxid (SO₂) in Schwefelsäure umgewandelt, sodass der Gehalt an Schwefeldioxid in der Abluft vorzugsweise weniger als 5 ppm beziehungsweise der Umsatz von Schwefeldioxid (SO₂) zu Schwefelsäure (H₂SO₄) mehr als 99,999 % beträgt.

In den ersten beiden Konvertern wird das Schwefeldioxid (SO₂) mittels Edelmetall- und/oder Vanadium-Katalysatoren bei Temperaturen von beispielsweise mehr als 400 °C oxidiert sowie hydratisiert und die Produktsäure jeweils in einem nachgeschalteten Kondenser kondensiert.

Im dritten (Aktivkohle-)Konverter werden bei Temperaturen von beispielsweise unter 100 °C mittels Aktivkohle die im Prozessgas verbliebenen Schwefelverbindungen zu Schwefeltrioxid oxidiert und an der Aktivkohle adsorbiert. Die Aktivkohle wird kontinuierlich und sektionsweise regeneriert, wobei das Schwefeltrioxid mit einer Regenerationsflüssigkeit, vornehmlich reinem Wasser oder Dünnsäure, ausgewaschen wird, wobei eine Dünnsäure gebildet wird, welche zweckmäßigerweise in einen Kondensator und/oder auch den Spaltofen rückgeführt wird und so kein Abwasser produziert und auch keinen Chemikalieneinsatz erforderlich macht.

Ein mit der Erfindung erzielter Vorteil ist vor allem auch darin zu sehen, dass eine sehr hohe Effizienz und somit ein sehr hoher Wirkungsgrad erreicht wird, weil die im Prozessmedium, insbesondere einem Prozessgas, enthaltene Schwefelverbindungen, insbesondere das darin enthaltene Schwefeldioxid, annähernd vollständig in Schwefelsäure umgesetzt werden. Somit ist die Schwefeldioxid-Emission auf ein Minimum, insbesondere auf weniger als 5 ppm in einem Abgas, reduziert.

Einen weiteren erheblichen Vorteil stellt die Rückgewinnung der Metalle in Form von Metalloxiden dar, welche entweder als Feststoffe entsorgt oder einem einfachen Recycling-Prozess zugeführt werden.

Im ersten Verfahrensschritt werden die festen, flüssigen oder gasförmigen schwefelhaltigen Substanzen in einem Spaltofen gespalten und oxidiert, wobei die enthaltenen Verunreinigungen über eine Farm aus Heißgasfilterkerzen vollständig aus dem Prozessgas entfernt werden können. Das Prozessgas braucht nicht gewaschen zu werden; Elektrofilter haben sich für diesen Einsatz aufgrund unzureichender Abscheideleistungen nicht bewährt.

In einem zweiten Verfahrensschritt wird Schwefeldioxid zum Beispiel nasskatalytisch aus einem Prozessgas in Schwefeltrioxid und weiter in Schwefelsäure umgesetzt. Die Schwefelsäure wird in einem mehrstufigen Konverter, typischerweise zweistufig, produziert, und in einem ersten Kondensor kondensiert und als Säureprodukt abgeschieden. Hierbei wird in der Regel ein Wirkungsgrad von etwa 95 % erreicht und somit etwa 95 % eines anfänglichen Schwefeldioxids in Schwefelsäure umgesetzt, was den erheblichen Vorteil von geringeren Katalysatormengen mit sich bringt. Der Kondensor ist dabei vorteilhafterweise so ausgeführt, dass das Prozessgas, welches nicht umgesetztes Schwefeldioxid und Schwefeltrioxid enthält, direkt in dem ersten Kondensor rückaufgewärmt wird und kann somit einer zweiten Stufe zugeführt werden. Dadurch wird die Prozesswärme aus diesem Schritt bestmöglich genutzt.

Optional werden in diesem zweiten Verfahrensschritt bei der Verbrennung entstehende Stickoxide mittels selektiver katalytischer Reduktion (SCR) bzw. SCR-Technologie in Stickstoff und Wasserdampf umgewandelt.

In einem dritten Verfahrensschritt wird das verbliebene Schwefeldioxid beispielsweise analog dem zweiten Verfahrensschritt nasskatalytisch in Schwefelsäure umgesetzt. Aufgrund der bereits niedrigen Konzentration an Schwefeldioxid werden hierbei weit höhere Umsätze erreicht, typischerweise bis zu 99 % Umsatz von verbliebenem SO₂ zu Schwefelsäure, was bereits einen Gesamtumsatz von 99,95 % ausmacht. Die so entstandene Schwefelsäure wird wie in der zweiten Stufe mittels eines mehrstufigen zweiten Konverters, typischerweise zweistufig, und einem zweiten Kondensor erreicht, wobei dieser so ausgeführt sein kann, dass die Prozessenergie zu mehr als 70 % zur Verbrennungsluftvorwärmung genutzt wird.

Erfindungsgemäß ist in einem vierten Verfahrensschritt vorgesehen, dass das Prozessgas, welches noch nicht umgesetztes Schwefeldioxid und Schwefeltrioxid enthält, in einen Aktivkohlereaktor bzw. -konverter geführt wird. Im Aktivkohlekonverter wird das Schwefeldioxid (SO₂) zu Schwefeltrioxid (SO₃) oxidiert, wobei das Schwefeltrioxid (SO₃) an der Aktivkohle adsorbiert. Die Aktivkohle kann mit der Regenerationsflüssigkeit, insbesondere mit Wasser und/oder Dünnsäure, gespült bzw. regeneriert werden, wobei das Schwefeltrioxid von der Regenerationsflüssigkeit absorbiert wird. Hierbei wird eine niedrig konzentrierte, typischerwewise 10 %ige Schwefelsäure gebildet, welche in den Spaltofen oder auch in einen Kondensor und damit in den Prozess zurückgeführt wird. Die Rückführung der niedrig konzentrierten Schwefelsäure in den Spaltofen hat den Vorteil, dass Verunreinigungen aus der Aktivkohle bzw. dem Spülwasser von der Heissgasfiltration abgeschieden werden und nicht in die Schwefelsäure gelangen. Das austretende Prozessgas bzw. Abgas umfasst üblicherweise weniger als 5 ppm Schwefeldioxid und ist somit im Wesentlichen frei von Schwefelverbindungen und kann über einen Kamin oder dergleichen in die Umwelt entlassen werden. Als Regenerationsflüssigkeit können Wasser und/oder Dünnsäure eingesetzt werden.

Um das Prozessgas zu erzeugen, kann vorgesehen sein, dass eine Abfallschwefelsäure in einen Spaltofen eingesprüht, mit einem Brenngas vermischt und oxidiert wird, wobei das Prozessgas erzeugt wird. Damit eine optimale Oxidation bzw. Verbrennung erreicht wird, erfolgt dies in der Regel bei zumindest 900 °C, vorzugsweise bei 950 °C bis 1200 °C, besonders bevorzugt bei etwa 1000 °C. Hierbei wird die in der Abfallschwefelsäure enthaltene Schwefelsäure in Schwefeldioxid (SO₂), Sauerstoff (O₂) und Wasser (H₂O) gespalten. Die in der Abfallschwefelsäure enthaltene Kohlenwasserstoffe werden zu Kohlendioxid (CO₂) und anorganische metallische Verunreinigungen zu Metalloxiden gespalten oder oxidiert. Das Prozessgas enthält üblicherweise Schwefeldioxid (SO₂), Stickstoff (N₂), Sauerstoff (O₂), Wasser (H₂O) sowie Kohlendioxid (CO₂) und Metalloxide.

Um das Prozessgas zu erzeugen, kann vorgesehen sein, dass eine Abfallschwefelsäure in den Spaltofen eingesprüht, mit einem Brenngas vermischt und oxidiert wird, wobei Prozessgas erzeugt wird. Damit eine optimale Oxidation bzw. Verbrennung erreicht wird, erfolgt dies in der Regel bei zumindest 900 °C, vorzugsweise bei 950 °C bis 1100 °C, besonders bevorzugt bei etwa 1000 °C. Hierbei wird eine in der Abfallschwefelsäure enthaltene Schwefelsäure in Schwefeldioxid und H₂O gespalten. Normalerweise werden in der Abfallschwefelsäure enthaltene Kohlenwasserstoffe zu CO₂ verbrannt und metallische Verunreinigungen oxidiert. Das Prozessgas enthält üblicherweise Schwefeldioxid, N₂, O₂, H₂O und gegebenenfalls CO₂ sowie Metalloxide.

Es hat sich bewährt, dass das Prozessmedium auf eine Temperatur von weniger als 1000 °C, vorzugsweise auf 400 °C bis 800 °C, besonders bevorzugt auf etwa 500 °C, gekühlt und anschließend gefiltert wird, wobei anorganische Verunreinigungen abgeschieden werden. Ein Kühlen des Prozessgases erfolgt vorzugsweise anschließend an die Oxidation bzw. Verbrennung im Spaltofen.

Zweckmäßigerweise werden wie erwähnt die Schwefelverbindungen, insbesondere in einem ersten Konverter und/oder in einem zweiten Konverter, in einem nasskatalytischen Verfahren zu Schwefelsäure umgesetzt.

Mit Vorteil wird das Prozessmedium in einem Verfahrensschritt durch mehrere, beispielsweise zwei, vorzugsweise drei, Katalysatorbetten geführt, wobei im Prozessgas enthaltenes Schwefeldioxid in Schwefeltrioxid umgesetzt und das Prozessgas zwischen den Katalysatorbetten sowie den Katalysatorbetten in einer Prozessrichtung nachgelagert gekühlt wird. Hierbei kann das Prozessgas durch den ersten Konverter geführt werden, wobei die Katalysatorbetten im ersten Konverter angeordnet sind. Anschließend an den ersten Konverter kann das Prozessgas in den ersten Kondensor geführt werden.

Bevorzugt ist vorgesehen, dass das Prozessgas in einem weiteren Verfahrensschritt zunächst auf eine Reaktionstemperatur, insbesondere auf etwa 400 °C, erwärmt und anschließend durch mehrere, beispielsweise zwei, vorzugsweise drei, Katalysatorbetten geführt wird, wobei im Prozessmedium enthaltenes Schwefeldioxid in Schwefeltrioxid umgesetzt und das Prozessmedium den Katalysatorbetten in Prozessrichtung nachgelagert gekühlt wird. Hierbei kann das Prozessgas durch den zweiten Konverter geführt werden, wobei die Katalysatorbetten im zweiten Konverter angeordnet sind. Anschließend an den zweiten Konverter kann das Prozessgas in den zweiten Kondensor geführt werden.

Zweckmäßigerweise ist vorgesehen, dass einem mit Schwefeltrioxid angereicherten Prozessmedium eine Säure, vorzugsweise eine Schwefelsäure, zugeführt wird, wobei das Prozessmedium bis zu einer Kondensationstemperatur abgekühlt wird, wobei die Schwefelsäure kondensiert und als Säureprodukt abgeführt wird. Dies erfolgt üblicherweise im Kondensor, insbesondere im ersten Kondensor und/oder im zweiten Kondensor.

Vorteilhaft ist es, wenn die aus dem Aktivkohlereaktor abgeführte Dünnsäure im Kondensor aufkonzentriert wird. Die Dünnsäure bzw. Regenerationsflüssigkeit kann hierfür, insbesondere im zweiten Kondensor bzw. im weiteren Verfahrensschritt, mit dem Prozessmedium vermischt werden, wobei die Schwefelsäure im zweiten Kondensor kondensiert wird.

Es ist günstig, wenn bei einem Verfahren zur Gewinnung von Schwefelsäure, insbesondere aus Abfallschwefelsäure, vorgesehen ist, dass das Prozessmedium, welches Schwefelverbindungen, insbesondere Schwefeldioxid, umfasst, durch den ersten Konverter und den ersten Kondensor geführt wird, wobei die Schwefelverbindungen teilweise in Schwefelsäure umgesetzt werden und die im ersten Kondensor kondensierte Schwefelsäure abgeführt wird, wonach das Prozessmedium durch den zweiten Konverter und den zweiten Kondensor geführt wird, wobei im Prozessmedium verbliebene Schwefelverbindungen teilweise in Schwefelsäure umgesetzt werden und die im zweiten Kondensor kondensierte Schwefelsäure abgeführt wird.

Die weitere Aufgabe wird erfindungsgemäß dadurch gelöst, dass eine Vorrichtung der eingangs genannten Art einen Aktivkohlereaktor aufweist, welcher den zumindest zwei Kondensoren in Prozessrichtung nachgelagert positioniert und zur Oxidation von Schwefeldioxid zu Schwefeltrioxid ausgebildet ist, wobei das Prozessgas in den Aktivkohlereaktor führbar ist und der Aktivkohlereaktor eine oder mehrere Zuleitungen und eine Ableitung für eine Regenerationsflüssigkeit aufweist, wobei die Ableitung vom Aktivkohlereaktor in einen Kondensor und/oder einen Spaltofen führt.

Ein mit der Erfindung erzielter Vorteil ist vor allem darin zu sehen, dass eine derartige Vorrichtung einen hohen Wirkungsgrad aufweist, sodass die Schwefelverbindungen, insbesondere das darin enthaltene Schwefeldioxid, effizient und annähernd vollständig in Schwefelsäure umgesetzt werden, sodass das ein Prozessgas, welches in die Umwelt entlassen wird, weitgehend frei von Schwefelrückständen ist.

Für eine Durchführung des üblicherweise mehrstufigen Verfahrens sind Komponenten der Vorrichtung, insbesondere der Konverter und der Kondensor einander in Prozessrichtung nachgelagert angeordnet. Ferner ist der Aktivkohlereaktor für die Durchführung eines weiteren Verfahrensschrittes dem Kondensor in Prozessrichtung nachgelagert positioniert. Die einzelnen Komponenten der Vorrichtung sind jeweils mit einer in Prozessrichtung vorgelagerten Komponente und/oder einer in Prozessrichtung nachgelagerten Komponente über eine Fluidverbindung, insbesondere über eine Leitung, verbunden, sodass das Prozessmedium, insbesondere ein Prozessgas, durch die Vorrichtung führbar ist, wobei das Prozessmedium die Komponenten passiert. Als Komponenten der Vorrichtung werden hierbei unter anderem der Spaltofen, die zumindest zwei Konverter, die zumindest zwei Kondensor und der Aktivkohlereaktor angesehen.

Bei einer Regeneration einer Aktivkohle mit der Regenerationsflüssigkeit wird üblicherweise Schwefeltrioxid in der Regenerationsflüssigkeit gelöst, wobei Dünnsäure bzw. eine verdünnte Schwefelsäure gebildet wird. Durch eine Fluidverbindung zwischen dem Aktivkohlereaktor und dem zweiten Kondensor, insbesondere durch die Ableitung, ist gewährleistet, dass die Regenerationsflüssigkeit bzw. die Dünnsäure in den Kondensor und so dem Prozess erneut zugeführt und mit dem Prozessmedium bzw. vermischt werden kann. Die Rückführung der Regenerationsflüssigkeit bzw. Dünnsäure kann ganz oder teilweise auch in den Spaltofen erfolgen.

Mit Vorteil weist die Vorrichtung eine erste Reaktorstufe, umfassend einen ersten Konverter und einen ersten Kondensor, und eine zweite Reaktorstufe, umfassend einen zweiten Konverter und einen zweiten Kondensor, auf, wobei das Prozessgas aus dem zweiten Kondensor in den Aktivkohlereaktor führbar ist und die Ableitung vom Aktivkohlereaktor in den zweiten Kondensor führt. Üblicherweise ist die zweite Reaktorstufe der ersten Reaktorstufe in Prozessrichtung nachgelagert angeordnet.

Bevorzugt weist die Vorrichtung einen Spaltofen auf, welcher dem ersten Konverter in Prozessrichtung vorgelagert angeordnet ist, wobei optional in Prozessrichtung zwischen dem Spaltofen und dem Konverter eine Filteranlage für das Prozessmedium positioniert ist. In der Regel ist der Spaltofen dem ersten Konverter bzw. der ersten Reaktorstufe vorgelagert angeordnet. Der Spaltofen umfasst vorzugsweise eine Brennkammer und eine oder mehrere Zuleitungen für die Abfallschwefelsäure, ein Brenngas und gegebenenfalls ein Säuregas und/oder eine Pressluft. Darüber hinaus kann der Spaltofen eine Kühleinrichtung aufweisen, welche der Brennkammer in Prozessrichtung nachgelagert angeordnet ist. Somit kann das Prozessmedium gekühlt werden, bevor dieses beispielsweise der Filteranlage zugeführt wird. Die Filteranlage ist vorzugsweise zur Abscheidung von anorganischen Verunreinigungen aus dem Prozessmedium ausgebildet.

Zweckmäßigerweise weist der erste Konverter mehrere, insbesondere zwei, Katalysatorbetten auf, wobei jeweils in Prozessrichtung den Katalysatorbetten nachgelagert eine Kühleinrichtung zur Kühlung des Prozessmediums angeordnet ist.

Vorteilhaft ist es, wenn der zweite Konverter mehrere, insbesondere zwei, Katalysatorbetten aufweist, wobei den Katalysatorbetten in Prozessrichtung eine Heizeinrichtung vorgelagert und eine Kühleinrichtung nachgelagert und optional ein SCR-Reaktor in Prozessrichtung zwischen der Heizeinrichtung und einem ersten Katalysatorbett positioniert sind. Die Katalysatorbetten des zumindest einen Konverters, beispielsweise des ersten und/oder des zweiten Konverters, sind vorzugsweise als PlatinKatalysatoren, insbesondere als Platin-Wabenkatalysatoren, ausgebildet. Um Stickoxide aus dem Prozessgas abzuscheiden, kann zur Durchführung einer SCR der SCR-Reaktor vorgesehen sein.

Es hat sich bewährt, dass zumindest einer der zumindest zwei Kondensoren mehrere, insbesondere drei, Kühleinrichtungen, vorzugsweise Glasrohrwärmetauscher, und optional einen Elektrofilter aufweist. Dadurch können eine Temperatur in den Kondensoren auf eine Kondensationstemperatur gebracht und gegebenenfalls das Prozessgas bzw. Prozessaerosol gefiltert werden.

Bevorzugt weist der Aktivkohlereaktor eine oder mehrere Sprühdüsen zum Einsprühen der Regenerationsflüssigkeit auf. Als Regenerationsflüssigkeit können insbesondere Wasser und/oder Dünnsäure vorgesehen sein.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig.1 eine Vorrichtung zur Gewinnung von Schwefelsäure;
Fig. 2 eine Detailansicht einer ersten Reaktorstufe;
Fig. 3 eine Detailansicht einer zweiten Reaktorstufe;
Fig. 4 eine Detailansicht eines Aktivkohlereaktors;
Fig. 5 eine Vorrichtung zur Gewinnung von Schwefelsäure aus Abfallschwefelsäure;
Fig. 6 eine schematische Darstellung der Verfahrensschritte.

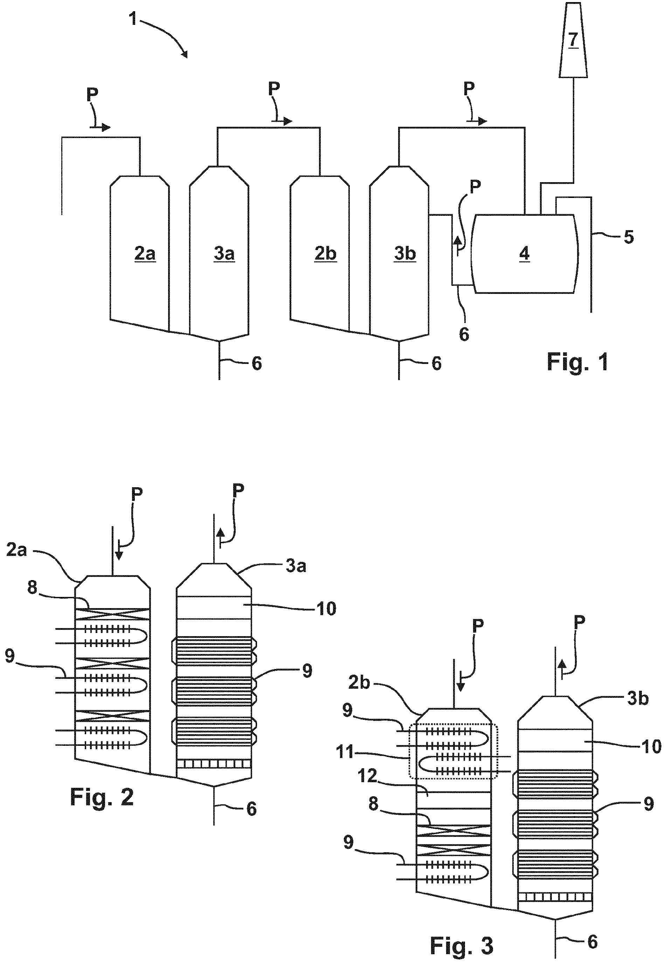

Fig. 1 zeigt eine vereinfachte Darstellung einer Vorrichtung 1 zur Gewinnung von Schwefelsäure, insbesondere aus Abfallschwefelsäure, umfassend einen ersten Konverter 2a und zweiten Konverter 2b, einen ersten Kondensor 3a und zweiten Kondensor 3b sowie einen Aktivkohlereaktor 4, wobei ein Prozessmedium wie ein Prozessgas in einer Prozessrichtung P durch die Vorrichtung 1 führbar ist. Hierbei bilden der erste Konverter 2a und der erste Kondensor 3a eine erste Reaktorstufe und der zweite Konverter 2b und der zweite Kondensor 3b eine zweite Reaktorstufe. Alternativ kann die Vorrichtung 1 auch mit nur einer Reaktorstufe ausgebildet sein. Die Konverter 2a, 2b sind in der Regel als SO₂-Konverter ausgebildet.

In Prozessrichtung P sind aufeinander folgend der erste Konverter 2a, der erste Kondensor 3a, der zweite Konverter 2b und der zweite Kondensor 3b angeordnet. Aufeinander folgende Komponenten sind jeweils über Leitungen miteinander verbunden. Dem zweiten Kondensor 3b in Prozessrichtung P nachgelagert ist der Aktivkohlereaktor 4 positioniert.

Der Aktivkohlereaktor 4 weist eine Zuleitung 5 für eine Regenerationsflüssigkeit und eine Ableitung 6 für die Regenerationsflüssigkeit auf. Ferner umfasst der Aktivkohlereaktor 4 eine Abgasleitung, welche ein Abgas beispielsweise zu einem Kamin 7 oder dergleichen führt.

Die beiden Kondensoren 3a, 3b weisen jeweils eine Ableitung 6 auf, über welche ein Schwefelsäurekondensat abgeführt werden kann.

In Fig. 2 ist eine Detailansicht der ersten Reaktorstufe gezeigt, welche den ersten Konverter 2a und den ersten Kondensor 3a umfasst. Der erste Konverter 2a weist mehrere Katalysatorbetten 8 und Wärmetauscher 9 auf. Die Wärmetauscher 9 des ersten Konverters 2a sind jeweils zur Abkühlung des Prozessgases bzw. als Kühleinrichtung ausgebildet. Hierfür können die Wärmetauscher 9 mit einem Flüssigsalzkühler verbunden sein.

Ferner weist der erste Kondensor 3a mehrere Wärmetauscher 9 auf, welche jeweils zur Abkühlung des Prozessmediums wie eines Prozessgases ausgebildet sind. Üblicherweise sind die Wärmetauscher 9 des ersten Kondensors 3a als Glasrohrwärmetauscher ausgebildet. Darüber hinaus weist der erste Kondensor 3a einen Elektrofilter 10 auf, um Verunreinigungen aus dem Prozessgas abzuscheiden. Die Ableitung 6 ist in der Regel an einem unteren Ende des ersten Kondensors 3a angeordnet, um eine Schwerkraft beim Abführen eines Schwefelsäurekondensats bzw. eines Säureprodukts auszunutzen.

Fig. 3 zeigt eine Detailansicht der zweiten Reaktorstufe, welche den zweiten Konverter 2b und den zweiten Kondensor 3b umfasst, wobei der zweite Kondensor 3b analog zum ersten Kondensor 3a aufgebaut ist. Ferner weist der zweite Konverter 2b mehrere Katalysatorbetten 8 und mehrere Wärmetauscher 9 auf. Hierbei ist einerseits vorgesehen, dass der oder die Wärmetauscher 9, welche den Katalysatorbetten 8 in Prozessrichtung P vorgelagert angeordnet sind, zur Erwärmung des Prozessgases ausgebildet sind. Der oder die Wärmetauscher 9 bilden somit eine Heizeinrichtung 11 aus. Andererseits ist vorgesehen, dass der oder die Wärmetauscher 9, welche den Katalysatorbetten 8 in Prozessrichtung P nachgelagert angeordnet sind, zur Abkühlung des Prozessgases bzw. als Kühleinrichtung ausgebildet sind.

Darüber hinaus weist der zweite Konverter 2b einen SCR-Reaktor 12 auf, welcher in Prozessrichtung P zwischen der Heizeinrichtung 11 und den Katalysatorbetten 8 angeordnet ist.

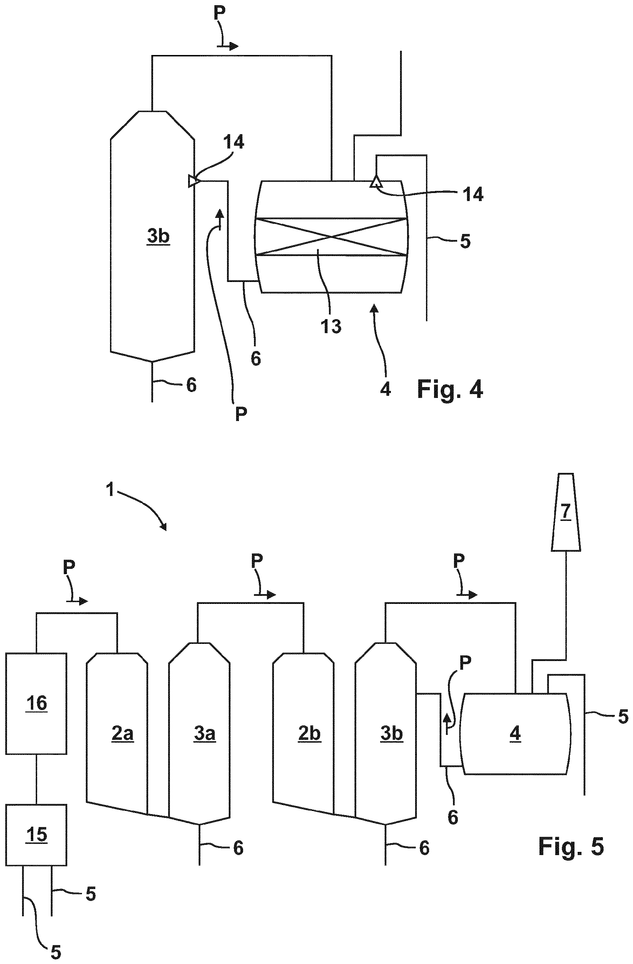

In Fig. 4 ist eine Detailansicht des Aktivkohlereaktors 4 dargestellt. Der Aktivkohlereaktor 4 ist dem Kondensor 3b, beispielsweise dem zweiten Kondensor 3b, in Prozessrichtung P nachgelagert angeordnet. Hierbei ist eine Leitung vorgesehen, welche vom Kondensor 3b in Prozessrichtung P zum Aktivkohlereaktor 4 führt, sodass das Prozessgas bzw. Prozessaerosol in den Aktivkohlereaktor 4 geführt werden kann. Der Aktivkohlereaktor 4 weist ein Aktivkohlebett 13 auf, welches eine Aktivkohle zur Abscheidung von Schwefeltrioxid umfasst.

Darüber hinaus ist vorgesehen, dass die Zuleitung 5 für die Regenerationsflüssigkeit über eine Sprühdüse 14 in den Aktivkohlereaktor 4 mündet. Ferner ist vorgesehen, dass die Ableitung 6 für die Dünnsäure bzw. die Regenerationsflüssigkeit über eine weitere Sprühdüse 14 in den zweiten Kondensator 3b mündet, sodass die Regenerationsflüssigkeit in den Kondensator 3b eingesprüht und mit dem Prozessgas vermengt werden kann.

Fig. 5 zeigt eine Vorrichtung 1 zur Gewinnung von Schwefelsäure aus einer Abfallschwefelsäure, welche im Wesentlichen analog zur Vorrichtung 1 aus Fig. 1 aufgebaut ist. Zusätzlich weist diese Vorrichtung 1 einen Spaltofen 15 und eine Filteranlage 16 auf.

Der Spaltofen 15 und die Filteranlage 16 sind dem oder den Konvertern 2a, 2b in Prozessrichtung P vorgelagert angeordnet und dienen im Wesentlichen einer Bereitstellung eines Prozessgases. Vorzugsweise umfasst der Spaltofen 15 eine Brennkammer und eine oder mehrere Zuleitungen 5 für die Abfallschwefelsäure, ein Brenngas und gegebenenfalls ein Säuregas und/oder eine Pressluft. In Fig. 5 sind beispielhaft zwei Zuleitungen 5 ersichtlich. Darüber hinaus kann der Spaltofen 15 eine Kühleinrichtung aufweisen, welche der Brennkammer in Prozessrichtung P nachgelagert angeordnet ist. Die Kühleinrichtung des Spaltofens 15 ist in der Regel ebenfalls als Wärmetauscher 9 ausgebildet, welcher vorzugsweise mit einem Flüssigsalzkühler verbunden ist. Mit der Filteranlage 16 können insbesondere anorganische Verunreinigungen aus dem Prozessgas abgeschieden werden.

Bei einem Verfahren zur Gewinnung von Schwefelsäure, insbesondere aus einer Abfallschwefelsäure, wird zunächst das Prozessgas bereitgestellt, welches in einem mehrstufigen Verfahren behandelt wird, um Schwefelsäure zu gewinnen.

Das Prozessgas ist im Wesentlichen ein Gas bzw. allgemein ein Medium, das zumindest eine Schwefelverbindung umfasst, beispielsweise ein Gas, umfassend Schwefeldioxid, und/oder ein Aerosol, umfassend Schwefelsäure.

Zur Bereitstellung eines Prozessgases kann beispielsweise vorgesehen sein, dass eine Abfallschwefelsäure in die Brennkammer des Spaltofens 15 eingesprüht und bei einer hohen Temperatur, insbesondere bei etwa 1000 °C, verbrannt bzw. oxidiert wird. Hierfür ist weiter vorgesehen, dass ein Brenngas in die Brennkammer zugeführt wird. Hierbei werden Kohlenwasserstoffe zu CO₂ und metallische Verunreinigungen zu Metalloxiden oxidiert. Ein so erzeugtes Prozessgas wird dann auf etwa 500 °C abgekühlt und weiter zur Filteranlage 16 geführt. In der Filteranlage 16 können anorganische Verunreinigungen aus dem Prozessgas abgeschieden werden.

Das Schwefeldioxid, welches im so gereinigten Prozessgas enthalten ist, wird in einem ersten Verfahrensschritt, insbesondere im ersten Konverter 2a bzw. in der ersten Reaktorstufe, zu Schwefeltrioxid oxidiert. Dies erfolgt üblicherweise in einem nasskatalytischen Verfahren. Das Prozessgas, welches Schwefeltrioxid enthält, wird weiter mit einer Flüssigkeit, in der Regel mit Schwefelsäure, vermischt, wobei das Schwefeltrioxid zumindest teilweise in Schwefelsäure umgesetzt bzw. von der Schwefelsäure gelöst wird. Im ersten Kondensator 3a wird die Schwefelsäure kondensiert und als Säureprodukt abgeführt.

Darüber hinaus wird das Prozessgas, welches Rückstände von Schwefeldioxid und Schwefeltrioxid enthält, in einem weiteren Verfahrensschritt, insbesondere im ersten Konverter 2a bzw. in der ersten Reaktorstufe, analog zum vorhergehenden Verfahrensschritt behandelt. Hierfür wird das Prozessgas zunächst auf eine Reaktionstemperatur, insbesondere auf etwa 400 °C, gebracht. Da bereits weniger Schwefelverbindungen im Prozessgas enthalten sind, sind im zweiten Konverter 2b in der Regel weniger Katalysatorbetten 8 erforderlich als im ersten Konverter 2b. Im zweiten Kondensator 3b wird die Schwefelsäure kondensiert und als Säureprodukt abgeführt. Um Stickoxide aus dem Prozessgas zu entfernen, kann vorgesehen sein, dass eine selektive katalytische Reduktion, insbesondere mit einem SCR-Reaktor 12, durchgeführt wird.

In einem weiteren Verfahrensschritt wird das Prozessgas, welches nur mehr geringe Rückstände von Schwefeldioxid und Schwefeltrioxid enthält, in den Aktivkohlereaktor 4 geführt, in welchem die Rückstände von Schwefeldioxid und Schwefeltrioxid in verdünnte Schwefelsäure umgesetzt werden. Hierbei wird Schwefeldioxid oxidiert und Schwefeltrioxid an der Aktivkohle angelagert. Mit einer Regenerationsflüssigkeit, beispielsweise mit Dünnsäure und/oder Wasser wird das Schwefeltrioxid von der Aktivkohle gelöst, wobei Dünnsäure bzw. verdünnte Schwefelsäure gebildet wird. Diese wird über eine Ableitung 6 einem Kondensor 3a, 3b vorzugsweise dem zweiten Kondensator 3b, zugeführt. Hierbei wird die Dünnsäure in den zweiten Kondensator 3b eingesprüht, wobei die Dünnsäure mit dem Prozessgas bzw. Prozessaerosol vermengt wird. Durch das Kondensieren der Schwefelsäure in einem der Kondensoren 3a, 3b bzw. im entsprechenden Verfahrensschritt wird die Schwefelsäure konzentriert und kann als Säureprodukt abgeschieden werden.

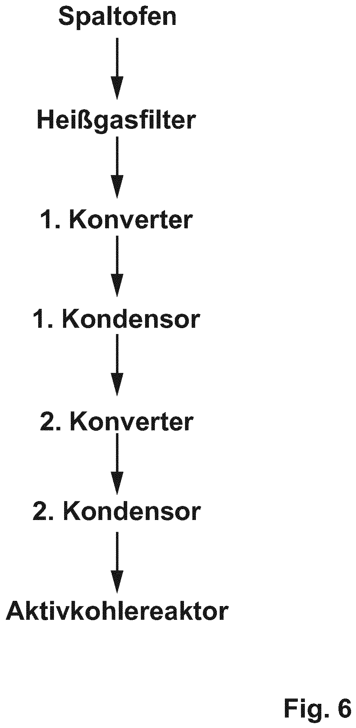

In Fig. 6 sind die Verfahrensschritte in einem Verfahrensschema dargestellt. Ein aus diesem Verfahren resultierendes Abgas ist annähernd frei von Schwefelverbindungen, weshalb mit einem derartigen Verfahren bzw. einer derartigen Vorrichtung 1 eine besonders umweltverträgliche Gewinnung von Schwefelsäure, insbesondere aus Abfallschwefelsäure, ermöglicht wird.

## Patentansprüche

1. Verfahren zur Gewinnung von Schwefelsäure, insbesondere aus verunreinigten schwefelhaltigen Medien wie einer Abfallschwefelsäure, wobei ein Prozessmedium, insbesondere ein Prozessgas, welches Prozessmedium Schwefelverbindungen, insbesondere Schwefeldioxid, umfasst, bereitgestellt wird, wobei die Schwefelverbindungen in einem Spaltofen (15) gespalten und oxidiert und danach in einem ersten Konverter (2a) teilweise in Schwefelsäure umgesetzt werden, die Schwefelsäure in einem ersten Kondensor (3a) kondensiert und eine kondensierte Schwefelsäure als Säureprodukt abgeführt wird, wonach das Prozessmedium in einem zweiten Konverter (2b) teilweise in Schwefelsäure umgesetzt und die Schwefelsäure in einem zweiten Kondensor (3b) kondensiert und eine kondensierte Schwefelsäure als Produkt abgeführt wird, **dadurch gekennzeichnet, dass** das Prozessmedium in einen dem zweiten Kondensor (3b) nachgeschalteten Aktivkohlereaktor (4) geführt wird, wobei im Prozessmedium verbliebene Schwefelverbindungen zu Schwefeltrioxid oxidiert werden, welches an einer Aktivkohle adsorbiert, und die Aktivkohle regeneriert wird, wobei das Schwefeltrioxid mit einer Regenerationsflüssigkeit gelöst wird, wobei eine Dünnsäure gebildet wird, welche in einen Kondensor (3a, 3b) und/oder den Spaltofen (15) geführt wird.

2. Verfahren nach Anspruch 1, **dadurch gekennzeichnet, dass** die Abfallschwefelsäure in den Spaltofen (15) eingesprüht, mit einem Brenngas vermischt und oxidiert wird, wobei Prozessgas erzeugt wird.

3. Verfahren nach Anspruch 1 oder 2, **dadurch gekennzeichnet, dass** das Prozessmedium auf eine Temperatur von weniger als 1000 °C, vorzugsweise auf 400 °C bis 800 °C, besonders bevorzugt auf etwa 500 °C, gekühlt und anschließend gefiltert wird, wobei anorganische Verunreinigungen abgeschieden werden.

4. Verfahren nach einem der Ansprüche 1 bis 3, **dadurch gekennzeichnet, dass** die Schwefelverbindungen, insbesondere in einem ersten Konverter (2a) und/oder in einem zweiten Konverter (2b), in einem nasskatalytischen Verfahren zu Schwefelsäure umgesetzt werden.

5. Verfahren nach einem der Ansprüche 1 bis 4, **dadurch gekennzeichnet, dass** das Prozessmedium in einem ersten Verfahrensschritt durch mehrere, beispielsweise zwei, vorzugsweise drei, Katalysatorbetten (8) geführt wird, wobei im Prozessmedium enthaltenes Schwefeldioxid in Schwefeltrioxid umgesetzt und das Prozessmedium zwischen den Katalysatorbetten (8) sowie den Katalysatorbetten (8) in einer Prozessrichtung (P) nachgelagert gekühlt wird.

6. Verfahren nach einem der Ansprüche 1 bis 5, **dadurch gekennzeichnet, dass** das Prozessmedium in einem weiteren Verfahrensschritt zunächst auf eine Reaktionstemperatur, insbesondere auf etwa 400 °C, erwärmt und anschließend durch mehrere, vorzugsweise zwei, Katalysatorbetten (8) geführt wird, wobei im Prozessmedium enthaltenes Schwefeldioxid in Schwefeltrioxid umgesetzt und das Prozessmedium den Katalysatorbetten (8) in Prozessrichtung (P) nachgelagert gekühlt wird.

7. Verfahren nach einem der Ansprüche 1 bis 6, **dadurch gekennzeichnet, dass** einem mit Schwefeltrioxid angereicherten Prozessmedium eine Säure, vorzugsweise eine Schwefelsäure, zugeführt wird, wobei das Prozessmedium bis zu einer Kondensationstemperatur abgekühlt wird, wobei die Schwefelsäure kondensiert und als Säureprodukt abgeführt wird.

8. Verfahren nach einem der Ansprüche 1 bis 7, **dadurch gekennzeichnet, dass** die aus dem Aktivkohlereaktor (4) abgeführte Dünnsäure im Kondensator (3) aufkonzentriert wird.

9. Vorrichtung (1) zur Gewinnung von Schwefelsäure, insbesondere aus verunreinigten schwefelhaltigen Medien wie einer Abfallschwefelsäure, insbesondere zur Durchführung eines Verfahrens nach einem der Ansprüche 1 bis 8, umfassend zumindest einen Spaltofen (15) und nachgeschaltet zwei Konverter (2a, 2b) und zumindest zwei Kondensoren (3a, 3b), die den Konvertern (2a, 2b) jeweils nachgeschaltet sind, wobei ein Prozessmedium, insbesondere ein Prozessgas, welches Schwefelverbindungen, insbesondere Schwefeldioxid, umfasst, in einer Prozessrichtung (P) durch die Vorrichtung (1) führbar ist und die zumindest zwei Konverter (2a, 2b) zur Oxidation von Schwefeldioxid zu Schwefeltrioxid und die zumindest zwei Kondensoren (3a, 3b) zur Kondensation von Schwefelsäure ausgebildet sind, **dadurch gekennzeichnet, dass** die Vorrichtung (1) einen Aktivkohlereaktor (4) aufweist, welcher den zumindest zwei Kondensoren (3a, 3b) in Prozessrichtung (P) nachgelagert positioniert und zur Oxidation von Schwefeldioxid zu Schwefeltrioxid ausgebildet ist, wobei das Prozessgas in den Aktivkohlereaktor (4) führbar ist und der Aktivkohlereaktor (4) eine oder mehrere Zuleitungen (5) und eine Ableitung (6) für eine Regenerationsflüssigkeit aufweist, wobei die Ableitung (6) vom Aktivkohlereaktor (4) in einen Kondensor (3a, 3b) und/oder einen Spaltofen (15) führt.

10. Vorrichtung (1) nach Anspruch 9, **dadurch gekennzeichnet, dass** die Vorrichtung (1) eine erste Reaktorstufe, umfassend einen ersten Konverter (2a) und einen ersten Kondensor (3a), und eine zweite Reaktorstufe, umfassend einen zweiten Konverter (2b) und einen zweiten Kondensor (3b), aufweist, wobei das Prozessmedium aus dem zweiten Kondensor (3b) in den Aktivkohlereaktor (4) führbar ist und die Ableitung (6) vom Aktivkohlereaktor (4) in den zweiten Kondensator (3b) führt.

11. Vorrichtung (1) nach Anspruch 9 oder 10, **dadurch gekennzeichnet, dass** die Vorrichtung (1) einen Spaltofen (15) aufweist, welcher dem ersten Konverter (2a) in Prozessrichtung (P) vorgelagert angeordnet ist, wobei optional in Prozessrichtung (P) zwischen dem Spaltofen (15) und dem Konverter (2a) eine Filteranlage (16) für das Prozessmedium positioniert ist.

12. Vorrichtung (1) nach Anspruch 10 oder 11, **dadurch gekennzeichnet, dass** der erste Konverter (2a) mehrere, insbesondere zwei, Katalysatorbetten (8) aufweist, wobei jeweils in Prozessrichtung (P) den Katalysatorbetten (8) nachgelagert eine Kühleinrichtung zur Kühlung des Prozessmediums angeordnet ist.

13. Vorrichtung (1) nach einem der Ansprüche 10 bis 12, **dadurch gekennzeichnet, dass** der zweite Konverter (2b) mehrere, insbesondere zwei, Katalysatorbetten (8) aufweist, wobei den Katalysatorbetten (8) in Prozessrichtung (P) eine Heizeinrichtung (11) vorgelagert und eine Kühleinrichtung nachgelagert und optional ein SCR-Reaktor (12) in Prozessrichtung (P) zwischen der Heizeinrichtung (11) und einem ersten Katalysatorbett (8) positioniert sind.

14. Vorrichtung (1) nach einem der Ansprüche 9 bis 13, **dadurch gekennzeichnet, dass** zumindest einer der zumindest zwei Kondensoren (3a, 3b) mehrere, insbesondere drei, Kühleinrichtungen, vorzugsweise Glasrohrwärmetauscher, und optional einen Elektrofilter (10) aufweist.

15. Vorrichtung (1) nach einem der Ansprüche 9 bis 14, **dadurch gekennzeichnet, dass** der Aktivkohlereaktor (4) eine oder mehrere Sprühdüsen (14) zum Einsprühen der Regenerationsflüssigkeit aufweist.

## Claims

1. A process for the production of sulphuric acid, in particular from contaminated sulphur-containing media such as waste sulphuric acid, wherein a process medium is provided, in particular a process gas, the process medium comprising sulphur compounds, in particular sulphur dioxide, wherein the sulphur compounds are cracked in a cracking furnace (15) and oxidized and then partially converted into sulphuric acid in a first converter (2a), the sulphuric acid is condensed in a first condenser (3a) and a condensed sulphuric acid is discharged as an acid product, whereupon the process medium is partially converted into sulphuric acid in a second converter (2b) and the sulphuric acid is condensed in a second condenser (3b) and a condensed sulphuric acid is discharged as a product, **characterized in that** the process medium is fed into an activated carbon reactor (4) which is downstream of the second condenser (3b), wherein sulphur compounds remaining in the process medium are oxidized into sulphur trioxide which is adsorbed onto activated carbon, and the activated carbon is regenerated, wherein the sulphur trioxide is dissolved with a regeneration liquid, whereupon a dilute acid is formed which is fed into a condenser (3a, 3b) and/or into the cracking furnace (15).

2. The process as claimed in claim 1, **characterized in that** the waste sulphuric acid is sprayed into the cracking furnace (15), mixed with a combustion gas and oxidized, whereupon process gas is produced.

3. The process as claimed in claim 1 or claim 2, **characterized in that** the process medium is cooled to a temperature of less than 1000°C, preferably to 400°C to 800°C, particularly preferably to approximately 500°C, and then filtered, whereupon inorganic contaminants are eliminated.

4. The process as claimed in one of claims 1 to 3, **characterized in that** the sulphur compounds are converted into sulphuric acid in a wet catalytic process, in particular in a first converter (2a) and/or in a second converter (2b).

5. The process as claimed in one of claims 1 to 4, **characterized in that** in a first step of the process, the process medium is fed through a plurality of catalyst beds (8), for example two, preferably three, whereupon sulphur dioxide contained in the process medium is converted into sulphur trioxide and the process medium is cooled between the catalyst beds (8) as well as downstream of the catalyst beds (8) in a process direction (P).

6. The process as claimed in one of claims 1 to 5, **characterized in that** in a further step of the process, the process medium is initially heated to a reaction temperature, in particular to approximately 400°C, and then fed through a plurality of catalyst beds (8), preferably two, whereupon sulphur dioxide contained in the process medium is converted into sulphur trioxide, and the process medium is cooled downstream of the catalyst beds (8) in the process direction (P).

7. The process as claimed in one of claims 1 to 6, **characterized in that** an acid, preferably an acid of sulphur, is supplied to a process medium which is enriched with sulphur trioxide, wherein the process medium is cooled to a condensation temperature, whereupon the sulphuric acid condenses and is discharged as the acid product.

8. The process as claimed in one of claims 1 to 7, **characterized in that** the dilute acid discharged from the activated carbon reactor (4) is concentrated in the condenser (3).

9. A device (1) for the production of sulphuric acid, in particular from contaminated sulphur-containing media such as waste sulphuric acid, in particular for carrying out a process as claimed in one of claims 1 to 8, comprising at least one cracking furnace (15) and two downstream converters (2a, 2b) and at least two condensers (3a, 3b) which are respectively downstream of the converters (2a, 2b), wherein a process medium, in particular a process gas, which comprises sulphur compounds, in particular sulphur dioxide, can be fed through the device (1) in a process direction (P) and the at least two converters (2a, 2b) are configured for oxidation of sulphur dioxide to sulphur trioxide and the at least two condensers (3a, 3b) are configured for the condensation of sulphuric acid, **characterized in that** the device (1) has an activated carbon reactor (4) which is positioned downstream in the process direction (P) of the at least two condensers (3a, 3b) and is configured for the oxidation of sulphur dioxide to sulphur trioxide, wherein the process gas can be fed into the activated carbon reactor (4) and the activated carbon reactor (4) has one or more supply lines (5) and a discharge line (6) for a regeneration liquid, wherein the discharge line (6) from the activated carbon reactor (4) leads into a condenser (3a, 3b) and/or a cracking furnace (15).

10. The device (1) as claimed in claim 9, **characterized in that** the device (1) has a first reactor stage comprising a first converter (2a) and a first condenser (3a), and a second reactor stage comprising a second converter (2b) and a second condenser (3b), wherein the process medium can be fed out of the second condenser (3b) into the activated carbon reactor (4) and the discharge line (6) from the activated carbon reactor (4) feeds into the second condenser (3b).

11. The device (1) as claimed in claim 9 or claim 10, **characterized in that** the device (1) has a cracking furnace (15) which is disposed upstream of the first converter (2a) in the process direction (P), wherein optionally, a filter unit (16) for the process medium is positioned between the cracking furnace (15) and the converter (2a) in the process direction (P).

12. The device (1) as claimed in claim 10 or claim 11, **characterized in that** the first converter (2a) has a plurality of catalyst beds (8), in particular two, wherein a respective cooling device for cooling the process medium is disposed downstream of the catalyst beds (8) in the process direction (P).

13. The device (1) as claimed in one of claims 10 to 12, **characterized in that** the second converter (2b) has a plurality of catalyst beds (8), in particular two, wherein a heating device (11) is disposed upstream of the catalyst beds (8) in the process direction (P) and a cooling device is disposed downstream thereof, and optionally, a SCR reactor (12) is positioned between the heating device (11) and a first catalyst bed (8) in the process direction (P).

14. The device (1) as claimed in one of claims 9 to 13, **characterized in that** at least one of the at least two condensers (3a, 3b) has a plurality of cooling devices, in particular three, preferably glass tube heat exchangers, and optionally an electrostatic precipitator (10).

15. The device (1) as claimed in one of claims 9 to 14, **characterized in that** the activated carbon reactor (4) has one or more spray nozzles (14) for spraying in the regeneration liquid.

## Revendications

1. Procédé, destiné à produire de l'acide sulfurique, notamment à partir de milieux contaminés contenant du soufre, comme un déchet d'acide sulfurique, lors duquel l'on met à disposition un milieu de processus, notamment un gaz de processus, lequel milieu de processus comprend des composés soufrés, notamment du dioxyde de soufre, les composés soufrés étant dissociés, puis oxydés dans un four de dissociation (15) et transformés partiellement par la suite en acide sulfurique dans un premier convertisseur (2a), l'acide sulfurique étant condensé dans un premier condenseur (3a) et un acide sulfurique condensé étant évacué en tant qu'un produit acide, suite à quoi, le milieu de processus est partiellement transformé en acide sulfurique dans un deuxième convertisseur (2b) et l'acide sulfurique est condensé dans un deuxième condenseur (3b) et un acide sulfurique condensé est évacué en tant que produit, **caractérisé en ce que** le milieu de processus est conduit dans un réacteur au charbon actif (4) monté en aval du deuxième condenseur (3b), des composés soufrés résiduels dans le milieu de processus étant oxydés en trioxyde de soufre, lequel est adsorbé sur un charbon actif et le charbon actif étant régénéré, le trioxyde de soufre étant dissous dans un liquide régénérateur, sous création d'un acide dilué, lequel est conduit dans un condenseur (3a, 3b) et/ou dans le four de dissociation (15).

2. Procédé selon la revendication 1, **caractérisé en ce que** l'on vaporise le déchet d'acide sulfurique dans le four de dissociation (15), on le mélange avec un gaz combustible et on le fait oxyder, en générant un gaz de processus.

3. Procédé selon la revendication 1 ou 2, **caractérisé en ce que** l'on refroidit le milieu de processus à une température inférieure à 1000 °C, de préférence de 400 °C à 800 °C, de manière particulièrement préférentielle, d'environ 500 °C et on le filtre par la suite, des impuretés inorganiques étant séparées.

4. Procédé selon l'une quelconque des revendications 1 à 3, **caractérisé en ce que** l'on transforme les composés soufrés en acide sulfurique, notamment dans un premier convertisseur (2a) et/ou dans un deuxième convertisseur (2b), lors d'un procédé catalytique humide.

5. Procédé selon l'une quelconque des revendications 1 à 4, **caractérisé en ce que** dans une première étape de procédé, l'on conduit le milieu de processus à travers plusieurs, par exemple à travers deux, de préférence trois lits catalytiques (8), du dioxyde de soufre contenu dans le milieu de processus étant transformé en trioxyde de soufre et le milieu de processus étant refroidi en aval entre les lits catalytiques (8) et les lits catalytiques (8) dans une direction de processus (P) .

6. Procédé selon l'une quelconque des revendications 1 à 5, **caractérisé en ce que** dans une étape de procédé suivante, le milieu de processus est chauffé d'abord à une température de réaction, notamment à environ 400 °C, et mené par la suite à travers plusieurs, de préférence deux lits catalytiques (8), du dioxyde de soufre contenu dans le milieu de processus étant transformé en trioxyde de soufre et le milieu de processus étant refroidi en aval des lits catalytiques (8), dans la direction de processus (P).

7. Procédé selon l'une quelconque des revendications 1 à 6, **caractérisé en ce que** l'on alimente vers un milieu de processus enrichi en trioxyde de soufre un acide, de préférence un acide sulfurique, le milieu de processus étant refroidi jusqu'à une température de condensation, l'acide sulfurique étant condensé et évacué en tant que produit acide.

8. Procédé selon l'une quelconque des revendications 1 à 7, **caractérisé en ce que** l'on fait concentrer dans le condenseur (3) l'acide évacué hors du réacteur au charbon actif (4).

9. Dispositif (1), destiné à produire de l'acide sulfurique, notamment à partir de milieux contaminés contenant du soufre, comme un déchet d'acide sulfurique, destiné notamment à réaliser un procédé selon l'une quelconque des revendications 1 à 8, comprenant au moins un four de dissociation (15) et en aval, deux convertisseurs (2a, 2b) et au moins deux condenseurs (3a, 3b), qui sont respectivement montés en aval des convertisseurs (2a, 2b), un milieu de processus, notamment un gaz de processus, lequel comprend des composés soufrés, notamment du dioxyde de soufre étant susceptible d'être conduit dans une direction de processus (P) à travers le dispositif (1) et les au moins deux convertisseurs (2a, 2b) étant conçus pour l'oxydation de dioxyde de soufre en un trioxyde de soufre et les au moins deux condenseurs (3a, 3b) étant conçus pour la condensation de l'acide sulfurique, **caractérisé en ce que** le dispositif (1) comporte un réacteur au charbon actif (4), lequel est positionné en aval des au moins deux condenseurs (3a, 3b) dans la direction de processus (P) et est conçu pour l'oxydation de dioxyde de soufre en trioxyde de soufre, le gaz de processus étant susceptible d'être conduit dans le réacteur au charbon actif (4) et le réacteur au charbon actif (4) comportant un ou plusieurs conduits d'alimentation (5) et un conduit d'évacuation (6) pour un liquide régénérateur, le conduit d'évacuation (6) menant du réacteur au charbon actif (4) dans un condenseur (3a, 3b) et/ou dans un four de dissociation (15).

10. Dispositif (1) selon la revendication 9, **caractérisé en ce que** le dispositif (1) comporte un premier étage de réacteur, comprenant un premier convertisseur (2a) et un premier condenseur (3a), et un deuxième étage de réacteur, comprenant un deuxième convertisseur (2b) et un deuxième condenseur (3b), le milieu de processus étant susceptible d'être conduit du deuxième condenseur (3b) dans le réacteur au charbon actif (4) et le conduit d'évacuation (6) menant du réacteur au charbon actif (4) dans le deuxième condenseur (3b).

11. Dispositif (1) selon la revendication 9 ou 10, **caractérisé en ce que** le dispositif (1) comporte un four de dissociation (15), lequel est monté en amont du premier convertisseur (2a) dans la direction de processus (P), en option dans la direction de processus (P) étant positionnée entre le four de dissociation (15) et le convertisseur (2a) une installation filtrante (16) pour le milieu de processus.

12. Dispositif (1) selon la revendication 10 ou 11, **caractérisé en ce que** le premier convertisseur (2a) comporte plusieurs, notamment deux lits catalytiques (8), chaque fois dans la direction de processus (P) étant monté en aval des lits catalytiques (8) un système de refroidissement, destiné à refroidir le milieu de processus.

13. Dispositif (1) selon l'une quelconque des revendications 10 à 12, **caractérisé en ce que** le deuxième convertisseur (2b) comporte plusieurs, notamment deux lits catalytiques (8), dans la direction de processus (P) étant montés en amont des lits catalytiques (8) un système de chauffage (11) et en aval de celui-ci, un système de refroidissement, et en option un réacteur SCR (12) entre le système de chauffage (11) et un premier lit de catalyseur (8) dans la direction de processus (P).

14. Dispositif (1) selon l'une quelconque des revendications 9 à 13, **caractérisé en ce qu'**au moins un des au moins deux condenseurs (3a, 3b) comporte plusieurs, notamment trois systèmes de refroidissement, de préférence des échangeurs thermiques à tubes en verre et en option, un filtre électrique (10).

15. Dispositif (1) selon l'une quelconque des revendications 9 à 14, **caractérisé en ce que** le réacteur au charbon actif (4) comporte ou plusieurs pulvérisateurs (14), destinés à pulvériser le liquide régénérateur.
